# EUROPÄISCHE PATENTANMELDUNG

(11) **EP 2 363 578 A2**
(43) Veröffentlichungstag der Anmeldung: **07.09.2011**
(21) Anmeldenummer: 11001810.8
(22) Anmeldetag: 04.03.2011
(51) Int. Cl.: F01K 13/00, F16K 1/00, F01K 3/20, F01K 9/02

(54) **Wärmekraftmaschine**

(30) Priorität: 04.03.2010 DE 102010010298
(71) Anmelder: Voith Patent GmbH, 89522 Heidenheim (DE)
(72) Erfinder: Nickl, Jörg, Dr., 01744 Melter (DE)
(74) Vertreter: Zeitler, Stephan

(57) **Zusammenfassung**

Die Erfindung betrifft eine Wärmekraftmaschine (10) mit einem Arbeitsmittelkreislauf, umfassend
- einen Verdampfer (12) zum Verdampfen des flüssigen Arbeitsmittels,
- einen Expander (14) zum Entspannen des verdampften Arbeitsmittels,
- einen Kondensator (20) zum Verflüssigen des entspannten Arbeitsmittels aus dem Expander (14), und
- eine Arbeitsmittelpumpe (16) zur Zufuhr von flüssigem Arbeitsmittel zu dem Verdampfer (12), wobei,
- ein Ventil (18) zur Steuerung der von der Arbeitsmittelpumpe (16) zu dem Verdampfer (12) geförderten Arbeitsmittelmenge vorgesehen ist,

Die Erfindung ist dadurch gekennzeichnet, dass
- das Ventil (18)
- einen Ventilsitz,
- einen Ventilkörper (98),
- einen über eine Gasdruckleitung oder sonstige druckleitende Verbindung angeschlossenen Fühler (82) und
- ein Steuerorgan (102) an dem Ventilkörper (98) oder zusätzlich zu dem Ventilkörper (98) aufweist, wobei

- der Ventilkörper (98) entsprechend seiner Stellung relativ zu dem Ventilsitz die Durchflussmenge des Arbeitsmittels durch das Ventil (18) reguliert und das Steuerorgan (102) die Stellung des Ventilkörpers (98) gemäß einem über den Fühler (82) vermittelten und von einer Zustandsgröße des Arbeitsmittels oder eines anderen Mediums abhängigen Steuerdruck beeinflusst.

## Beschreibung

Die Erfindung betrifft eine Wärmekraftmaschine mit einem Arbeitsmlttelkreislauf, Außerdem betrifft die Erfindung eine Antriebsvorrichtung.

Wärmekraftmaschinen, die gemäß dem Clausius-Rankine-Krelsprozess arbeiten, sind aus dem allgemeinen Stand der Technik bekannt. Eine Wärmekraftmaschine für diesen thermodynamischen Krelsprozess weist in ihrer einfachsten Form im Wesentlichen vier Hauptbaugruppen auf: eine Verdampfereinheit zum Verdampfen des flüssigen Arbeitsmittels, einen Expander zum Entspannen des verdampften Arbeitsmittels, eine Kondensatorbaugruppe zum Verflüssigen des entspannten Arbeitsmittels, die beispielsweise auch ein Reservoir für das flüssige Arbeitsmittel umfassen kann, sowie eine Arbeitsmittelpumpe, die das flüssige Arbeitsmittel aus dem Reservoir entnimmt und dem Verdampfer zuführt. Diese Baugruppen sind untereinander über entsprechende Leitungen verbunden.

Derartige Wärmekraftmaschinen sollen heutzutage auch in mit einem Verbrennungsmotor ausgestatteten Nutzfahrzeugen eingesetzt werden. Die bei einem Verbrennungsmotor entstehende Abwärme, beispielsweise aus dem Abgas der Verbrennungskraftmaschine, kann zum Antrieb der nachgeschalteten Wärmekraftmaschine genutzt werden und so der Gesamtwtrkungsgrad einer Antriebsvorrichtung, umfassend eine Verbrennungskraftmaschine und eine nachgeschaltete Wärmekraftmaschine, gesteigert werden. Ein Problemkreis bei den Wärmekraftmaschinen ist die Steuerung beziehungsweise Regelung der Arbeitsmittelpumpe. Entweder muss eine in ihrer Förderleistung regelbare Arbeitsmittelpumpe vorgesehen werden, oder es wird eine ungeregelte Arbeitsmittelpumpe mit einem Arbeitsmittelpumpenbypass vorgesehen, wobei die zum Verdampfer geleitete Arbeitsmittelmenge durch mehr oder minder starkes Öffnen eines Ventils in dem Bypass beeinflusst wird. Mit zunehmendem Verschließen des Ventils in dem Bypass wird mehr Arbeitsmittel In Richtung des Verdampfers geleitet, und mit zunehmendem Öffnen des Ventils in der Bypassleitung wird weniger Arbeitsmittel zu dem Verdampfer geleitet.

Heutzutage werden für solche Steuerungs- beziehungsweise Regelungsaufgaben in der Regel elektronische Steuergeräte vorgesehen, welche entweder das Saugvolumen der Arbeitsmittelpumpe, insbesondere bei einem elektrischen Antrieb variieren oder die Öffnungsstellung des Ventils in der Bypassleitung verändern. Jedes zusätzlich In einem Antriebsstrang vorgesehene Steuergerät ist jedoch zum einen mit Kosten und mit elektronischem Verschaltungsaufwand verbunden und erfordert zum anderen bei der Steuerung von sicherheitsrelevanten Aggregaten eine redundante Absicherung. Erfahrungsgemäß sind zudem elektronische Steuergeräte störanfällig.

Es ist demnach die Aufgabe der vorliegenden Erfindung, eine Wärmekraftmaschine mit einer Steuerung für eine Arbeltsmittelpumpe anzugeben, die einfach und robust Ist und stets zuverlässig arbeitet. Ferner soll eine Antriebsvorrichtung mit einer solchen Wärmekraftmaschine angegeben werden.

Die erfindungsgemäße Aufgabe wird durch eine Wärmekraftmaschine mit einem Arbeitsmittelkreislauf gemäß den Merkmalen des Patentanspruchs 1 und einer Antriebsvorrichtung gemäß Anspruch 18 gelöst. In den abhängigen Ansprüchen sind vorteilhafte und besonders zweckmäßige Ausgestaltungen der Erfindung angegeben.

Die Wärmekraftmaschine umfasst erfindungsgemäß ein Ventil zur Steuerung der von der Arbeitsmittelpumpe zu dem Verdampfer geförderten Arbeitsmittelmenge. Das Ventil weist einen Ventilsitz, der insbesondere durch ein Ventilgehäuse ausgebildet wird, und einen Ventilkörper auf. Der Ventilkörper befindet sich in der Regel innerhalb des Ventilgehäuses und kann beispielsweise als Ventilstößel ausgebildet sein. Es sind aber auch andere Anordnungen von Ventilkörper und Ventilgehäuse denkbar.

Der Ventilkörper reguliert entsprechend seiner Stellung relativ zu dem Ventilsitz beziehungsweise dem Ventilgehäuse den Durchfluss des Arbeitsmittels durch das Ventil. Hierbei beeinflusst ein Steuerorgan die Stellung des Ventilkörpers entsprechend einem über einen Fühler vermittelten Steuerdruck. Der Steuerdruck hängt von einer Zustandsgröße ab. Zur Übermittlung des Steuerdruckes vom Fühler auf das Steuerorgan, welches an dem Ventilkörper ausgeführt sein kann, beispielsweise In Form einer druckbeaufschlagten Oberfläche, oder zusätzlich zu dem Ventilkörper vorgesehen sein kann, ist eine Gasdruckleitung oder eine sonstige druckleitende-Verbindung zwischen dem Fühler und dem Steuerorgan vorgesehen. Diese Verbindung kann beispielsweise als Kapillare ausgeführt sein.

Auf diese Weise kann eine unabhängig von einer Steuereinheit oder Steuerelektronik arbeitende Steuerung beziehungsweise Regelung der Wärmekraftmaschine erfolgen. Bei einer geeigneten Wahl der Fühlerposition und damit insbesondere der Auswahl einer geeigneten Zustandsgröße des Arbeitsmittels kann beispielsweise bei einer entsprechenden Erhöhung des Wertes der Zustandsgröße eine Vergrößerung des Förderstromes von der Arbeitsmittelpumpe zu dem Verdampfer erfolgen und umgekehrt. Bei der Zustandsgröße des Arbeitsmittels handelt es sich um eine Temperatur. Der Arbeitsmittelkreislauf kann insbesondere geschlossen sein, eine Anwendung des erfindungsgemäßen Ventils in einem offenen Arbeitsmittelkreislauf ist jedoch ebenfalls möglich.

Eine besonders bevorzugte Ausführungsform der Erfindung sieht vor, dass das Steuerorgan eine Membran oder einen Kolben aufweist. Bei einer Ausbildung des Steuerorgans als Membran kann beispielsweise die Auslenkung beziehungsweise Verformung der Membran in Abhängigkeit von einem in dem Ventilgehäuse herrschenden Arbeitsmitteldruck und einem durch den Fühler und die Kapillare vermittelten Steuerdruck auf den Ventilkörper einwirken und so den Durchfluss des Arbeitsmittels steuern beziehungsweise regeln. In ähnlicher Weise kann eine derartige Steuerung beziehungsweise Regelung bei einer Ausbildung des Steuerorgans als Kolben erfolgen.

Insbesondere kann bei einer der vorherigen Ausführungsformen vorgesehen sein, dass der Fühler ein von einem Frischdampf und/oder einem Abgas umströmtes Gasvolumen umfasst. Bei dem Frischdampf kann es sich um das aus dem Verdampfer austretende Arbeitsmittel handeln. Bei dem Abgas kann es sich um das in den Verdampfer eintretende und von einer Verbrennungskraftmaschine stammende handeln, die mit der Wärmekraftmaschine gekoppelt ist.

Bei einer vorteilhaften Ausführungsform ist vorgesehen, dass das Ventil parallel zu der Arbeitsmittelpumpe, insbesondere zwischen der Saugseite und der Druckseite der Arbeitsmittelpumpe, angeordnet ist. Die Ausbildung und/oder Anordnung des Ventils parallel zu der Arbeitsmittelpumpe als Bypassventil ermöglicht eine besonders einfache und damit kostengünstige Ausgestaltung der Wärmekraftmaschine.

Eine besonders bevorzugte Weiterbildung der Erfindung sieht vor, dass ein erstes und ein zweites Steuerorgan zur Steuerung der Durchflussmenge durch das Ventil vorgesehen sind. Dies ermöglicht die Berücksichtigung einer weiteren Zustandsgröße des Arbeitsmittels. Eine deutlich komplexere Steuerung der Wärmekraftmaschine basierend auf einem oder auf zwei Ventilen kann somit unter Umständen die Regelung des gesamten Dampfkreisprozesses umfassen.

Die Berücksichtigung einer zweiten Zustandsgröße bei der Steuerung der Durchflussmenge erlaubt eine genauere Steuerung der Wärmekraftmaschine und damit insbesondere des thermodynamischen Kreisprozesses. Dabei kann das zweite Steuerorgan gleichwirkend zu dem ersten Steuerorgan oder kompensierend beziehungsweise gegenwirkend zu dem ersten Steuerorgan ausgelegt sein.

Insbesondere kann vorgesehen sein, dass das erste Steuerorgan zur Steuerung der Durchflussmenge gemäß eines ersten Zustandsgrößenverhaltnisses des Arbeitsmittels und das zweite Steuerorgan zur Steuerung der Durchflussmenge gemäß eines zweiten Zustandsgrößenverhältnisses des Arbeitsmittels ausgelegt ist. Die Berücksichtigung zweier Zustandsgrößenverhältnisse, ermöglicht eine komplexe und umfassende Steuerung des thermodynamischen Kreisprozesses der Wärmekraftmaschine mittels einfacher mechanischer Mittel, die eine elektronische Steuerung des Kreisprozesses erübrigen.

Eine besonders bevorzugte Ausführungsform der Erfindung sieht vor, dass das erste und/oder das zweite Steuerorgan eine Gasseite und eine Arbeitsmittelseite aufweist/aufweisen, wobei an der Gasseite des ersten Steuerorgans ein von einer Temperatur des verdampften Arbeitsmittels abhängiger Gasdruck anliegt. Zusätzlich oder alternativ dazu kann der an der Gasseite des ersten Steuerorgans anliegende Gasdruck auch von einer Abgastemperatur eines Verbrennungskraftmotors abhängig sein. Weiterhin kann alternativ oder zusätzlich dazu vorgesehen sein, dass an der Arbeitsmittelseite des ersten Steuerorgans ein Druck des Arbeitsmittels Im flüssigen Aggregatszustand anliegt. Zusätzlich kann die Arbeitsmittelseite und/oder die Gasseite des Steuerorgans mit einer Federkraft beaufschlagt sein. Insbesondere kann es sich bei dem Druck des flüssigen Arbeitsmittels um den an dem verdampferseitigen Ausgang (der Druckseite) der Arbeitsmittelpumpe herrschenden Arbeitsmitteldruck oder um den an dem kondensatorseltigen Eingang (der Saugseite) der Arbeitsmittelpumpe herrschenden Arbeitsmitteldruck handeln. Bei der Abgastemperatur, die auf den an der Gasseite herrschenden Gasdruck abgebildet wird, kann es sich um die Temperatur eines Abgases einer Verbrennungskraftmaschine am Verdampfereintritt handeln. Bei der Dampftemperatur des verdampften Arbeitsmittels kann es sich um die Frischdampftemperatur am Ausgang des Verdampfers der Wärmekraftmaschine handeln.

Das so mit Drücken beaufschlagte Steuerorgan kann die Durchflussmenge durch das Ventil im Zusammenwirken mit dem Ventilkörper, wie etwa einem mit einem Ventilsitz zusammenwirkenden Ventilkegel, steuern und somit bei einer geeigneten Anordnung parallel zu der Arbeitsmittelpumpe die effektiv von der Arbeitsmittelpumpe zu dem Verdampfer geförderte Arbeitsmittelmenge einstellen. Steigt beispielsweise der Verdampferdruck, das heißt der Druck des flüssigen Arbeitsmittels auf der Verdampferseite der Arbeitsmittelpumpe, ohne dass die Frischdampftemperatur des verdampften Arbeitsmittels ansteigt, öffnet das Ventil und die Arbeitsmittelpumpe fördert entsprechend weniger Arbeitsmittel. Dadurch sinkt der Dampfdruck im Verdampfer. Bei einem der Dampftemperatur des Arbeitsmittels, das heißt der Fühlertemperatur, entsprechend zu niedrigem Verdampferdruck wird das Ventil mehr geschlossen, sodass der Förderstrom von der Arbeitsmittelpumpe zu dem Verdampfer und damit wiederum auch der Verdampferdruck steigen. Somit regelt sich die Überhitzung beziehungsweise allgemein der Zusammenhang zwischen Druck und Temperatur auch bei überkritischer Betriebsweise am arbeitsmittelseitigen Verdampferaustritt einer Wärmekraftmaschine selbsttätig. Der Fühler kann dabei am Beginn der Frischdampfleitung, beispielsweise noch im Inneren des Verdampfers angeordnet und in Form eines Gasbehälters gut wärmeleitend angebracht sein. Insbesondere kann vorgesehen sein, dass der Fühler auch mit einem eintretenden heißen Gas, beispielsweise Abgas eines Verbrennungsmotors, umströmt wird. So ist sichergestellt, dass sich zu Beginn, wenn in dem Verdampfer noch kein Dampf erzeugt wird, das Ventil schließt und eine Förderung des Arbeitsmittels von der Arbeitsmittelpumpe zum Verdampfer erfolgt. Die Kapillare kann aus Stabilitätsgründen unter der Isolation einer Frischdampfleitung des Verdampfers zu dem Ventil geführt sein.

Gemäß einer weiteren Ausführungsform der Erfindung kann vorgesehen sein, dass an einer Gasseite des ersten oder des zweiten Steuerorgans ein von der Temperatur des flüssigen Arbeitsmittels an dem kondensatorseitigen Eingang (Saugseite) der Arbeitsmittelpumpe abhängiger Gasdruck anliegt und an einer Arbeitsmittelselte des ersten oder des zweiten Steuerorgans eine Federkraft und/oder der Druck des flüssigen Arbeitsmittels an dem kondensatorseitigen Eingang der Arbeitsmittelpumpe anliegen. Diese Ausgestaltung des Steuerorgans kann zusätzlich oder alternativ zu dem vorher beschriebenen Steuerorgan in dem Ventil vorgesehen sein. Erfindungsgemäß können also In einer ersten Ausführungsform das erste und das zweite Steuerorgan in einem Ventil angeordnet sein, wohingegen eine alternative Ausführungsform zwei getrennte Ventile vorsieht. Bei der ersten Ausführungsform kann es vorgesehen sein, dass das erste und das zweite Steuerorgan auf ein gemeinsames Stellelement wirken.

Der Kontakt des Steuerorgans mit dem saugseitigen Fluid der Arbeitsmittelpumpe auf der Arbeitsmittelseite, zum Beispiel dem Kondensat der Wärmekraftmaschine, und der Kontakt der Gasseite des Steuerorgans mit einem mit Gas gefüllten abgeschlossenen Volumen, das von der Ansaugtemperatur der Arbeitsmittelpumpe abhängt, ermöglicht so beispielsweise gemäß der ersten Ausführungsform eine zweite Steuerungsmöglichkeit der Durchflussmenge durch das Ventil. Während der gasseitige Gasdruck von der Ansaugtemperatur der Arbeitsmittelpumpe abhängt, herrscht auf der Arbeitsmittelseite der Membran stets der Kondensatordruck. Dieser kann in einer besonderen Ausgestaltung der vorliegenden Erfindung gleich dem Umgebungsdruck sein. Steigt somit die Ansaugtemperatur der Arbeitsmittelpumpe, erhöht sich auch der gasseitige Gasdruck, wodurch bei Überschreiten der Druckkraft des flüssigen Arbeitsmittels, gegebenenfalls unterstützt durch eine Federkraft, das Ventil weiter öffnet. Dadurch sinkt der geförderte Massestrom durch die Arbeitsmittelpumpe und die Überhitzung am Verdampferaustritt und die Unterkühlung am Kondensatoraustritt steigen. Wird die Membran dieser Ausführungsform mit der vorher beschriebenen Membran kombiniert, kann über ein einfaches Pumpenregelventil ein ganzer Wärmekraftprozess überwacht werden.

Alternativ zu der vorstehend erläuterten ersten Ausführungsform kann das erste Steuerorgan In einem ersten Ventil und das zweite Steuerorgan in einem zweiten Ventil angeordnet sein. Die Aufteilung der beiden Steuerorgane auf zwei verschiedene Ventile ermöglicht eine genauere und feinfühligere Steuerung beziehungsweise Regelung der Wärmekraftmaschine.

Vorteilhafterweise kann die Wärmekraftmaschine einen zusätzlichen Wärmetauscher (auch Vorwärmer genannt) umfassen, wobei der Wärmetauscher mit dem Eingang des Verdampfers und mit dem Ausgang des Verdampfers verbunden ist. Bei einer geeigneten Steuerung kann somit das dem Verdampfer zugeführte flüssige Arbeitsmittel mittels des von dem Verdampfer abgeführten dampfförmigen Arbeitsmittels vorgewärmt werden. Die Erhöhung der Arbeitsmitteleintrittstemperatur am Verdampfer bewirkt eine reduzierte Aufnahme von Wärmeenergie über den Verdampfer in den Arbeitsmittelkreislauf.

Die Steuerung der durch den Verdampfer an den Arbeitsmittelkreislauf abgegebenen Wärmeenergie kann beispielsweise dadurch erfolgen, dass das zweite Ventil nach dem zusätzlichen Wärmetauscher als Bypass zum Expander angeordnet ist. Das zweite Ventil wird durch das Verhältnis von Arbeitsmitteldruck und Arbeitsmitteltemperatur am Kondensatorausgang beeinflusst.

Es erfolgt somit beispielsweise bei einer kondensatorausgangsseitigen Erhöhung der Arbeitsmitteltemperatur über einem kritischen Wert bei einem im Wesentlichen gleichbleibenden Arbeitsmitteldruck eine Öffnung des zweiten Ventils. Dies führt zu einer vermehrten Durchströmung des Vorwärmers, was wiederum eine Erhöhung der Arbeitsmitteleintrittstemperatur am Verdampfer bewirkt und damit zu einer Senkung der Wärmeleistung und somit zu einer Absenkung der kondensatorausgangsseitigen Arbeitsmitteltemperatur führt,

Eine weitere Ausführungsform der Erfindung sieht vor, dass zusätzlich zu dem ersten Verdampfer ein zweiter Verdampfer, insbesondere ein Abgasrückführungsverdampfer, angeordnet ist. Der Abgasrückführungsverdampfer, auch AGR-Verdampfer genannt, ist Teil eines Abgasrückführungssystems zur Optimierung der Abgasemissionen von Verbrennungsmotoren und nimmt Wärme aus dem rückgeführten Abgas zur Verdampfung des Arbeitsmittels der Wärmekraftmaschine auf. Dabei ist von besonderem Interesse, eine bestimmte (niedrigere) Abgastemperatur des rückgeführten Abgases in Abhängigkeit von dem aktuellen Betriebszustand des Verbrennungsmotors zu erreichen. Um eine geregelte Temperaturbeeinflussung des Abgases beziehungsweise eine definierte Energieentnahme durch den AGR-Verdampfer zu erzielen, kann beispielsweise ein Teilungsventil in die gemeinsame Vorlaufleitung der Verdampfer integriert werden. Das Teilungsverhältnis lässt sich dann anhand der Ausgangstemperatur der Abgase steuern oder regeln.

Eine ebenfalls vorteilhafte Ausführungsform der Erfindung sieht vor, dass das Ventil je ein Füllventil zur Befüllung der Gasseite des ersten und/oder des zweiten Steuerorgans aufweist. Dieses beziehungsweise diese Füllventile gewähren einen Zugang zu dem Volumen der Gasseite des Steuerorgans und können auslegungsgemäß bis zu bestimmten Drücken im kalten Zustand aufgefüllt werden. Dazu kann beispielsweise Stickstoff aus einer Druckgasflasche verwendet werden.

Gemäß einer besonders bevorzugten Ausführungsform Ist vorgesehen, dass der Kondensator der Wärmekraftmaschine ein mit der Umgebung druckausgeglichener Kondensator ist. Dabei kann insbesondere vorgesehen sein, dass die den Kondensator umfassende Baugruppe oberhalb der Arbeitsmittelpumpe liegt und so eine natürliche Zulaufhöhe zusätzlich zur Unterkühlung des Arbeitsmittelfluids, nämlich dem Verdampfungsmedium, am Arbeitsmittelpumpeneingang vorhanden ist. Die gesamte Wärmekraftmaschine Ist zwar aus Sicht des Arbeitsmittels geschlossen, das Arbeitsmittel wird aber bei Umgebungsdruck kondensiert und jeglicher Über- oder Unterdruck durch einen besonderen Tankverschluss in der Kondensatorbaugruppe vermieden. Das Druckniveau des Kondensators wird somit festgehalten, Die Drücke im Kreislauf können folglich bei einer eventuell vorhandenen mangelhaften Wärmeabfuhr am Kondensator nicht übermäßig ansteigen. Die Arbeitsmittelpumpe würde dann gegebenenfalls ein Dampf-Flüssigkeitsgemisch ansaugen. Der Tankverschluss befindet sich über dem höchsten Punkt des Kondensators und dient neben der Nachfüllmöglichkeit des Arbeitsmittels auch der Abfuhr leichterer, nicht kondensierbarer Gase wie etwa eingedrungener Luft.

Eine bevorzugte Weiterbildung der Erfindung sieht vor, dass eine verschließbare Verbindung zwischen der Verdampferseite der Arbeitsmittelpumpe und dem Kondensator vorgesehen ist. Dies ermöglicht ein Entleeren des Verdampfers entgegen der üblichen Durchströmrichtung direkt in den Kondensator, wodurch der Verdampferdruck schlagartig abfällt. Diese Verbindung kann beispielsweise über ein Magnetventil verschließbar sein, Integriert beziehungsweise parallel zu diesem Ventil kann auch ein Sicherheitsventil vorgesehen sein, das bei zu hohem Verdampferdruck öffnet.

Eine vorteilhafte Weiterbildung dieser Ausführungsform der Erfindung sieht vor, dass der Expander am Austritt einen Siphon aufweist. Dadurch wird bei deutlich höherem Kondensatoreintritt (vor allem bei luftgekühlten Kondensatoren) erreicht, dass in der Abdampfleitung entstehendes Kondensat in den Kondensator mitgerissen wird.

Weiterhin kann bevorzugt vorgesehen sein, dass das Arbeitsmittel Ethanol und/oder Glycerol umfasst. Ethanol kann als thermodynamisch optimales Verdampfungsmedium fungieren, wohingegen Glycerol als Schmieröl wirkt. Beide Partner sind umweltneutral und mischen sich in der Flüssigphase gut. Das Glycerol reichert sich vorwiegend im Ölsumpf des Dampfmotors an, wo der größte Dichteunterschied zwischen überhitztem Ethanol und flüssigem Glycerol eine gewollte Anreicherung von Letzterem bewirkt.

Die Erfindung wird nun unter Bezugnahme auf die Figuren anhand mehrerer Ausführungsbeispiele dargelegt.

Es zeigen:
- Figur 1: eine Schemazeichnung einer erfindungsgemäßen ersten Ausführungsform einer Wärmekraftmaschine;
- Figur 2: eine schematische Querschnittsansicht eines Dampfmotors zur Verwendung in der Wärmekraftmaschine gemäß den Figuren 1 und 4
- Figur 3: eine schematische Darstellung einer erfindungsgemäßen Ausführungsform eines Pumpenregelventils der Wärmekraftmaschine der Figur 1;
- Figur 4: ein Blockschaltbild einer zweiten Ausführungsform einer erfindungsgemäßen Wärmekraftmaschine;
- Figur 5: eine schematische Darstellung einer erfindungsgemäßen Ausführungsform eines allgemeinen Regelventils der Wärmekraftmaschine der Figur 4.

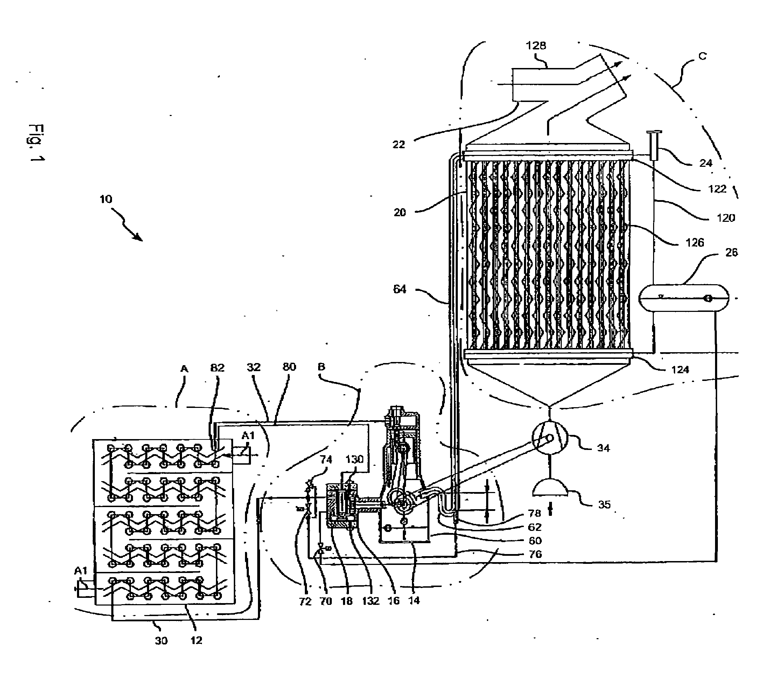

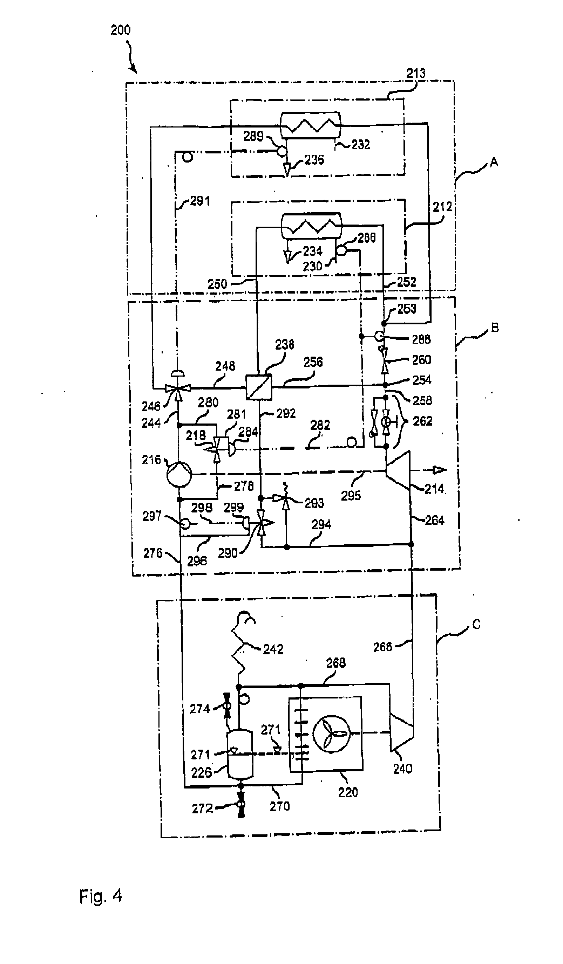

Die in den Figuren 1 und 4 in unterschiedlichen Ausführungsformen dargestellte Wärmekraftmaschine ist insbesondere dazu geeignet, zusammen mit einer Verbrennungskraftmaschine eine teilweise Nutzung der in dem Abgasstrom der Verbrennungskraftmaschine enthaltenen Exergie in Form von mechanischer Energie zu erzielen. Die den Abgasstrom erzeugende Verbrennungskraftmaschine selbst ist in den Figuren 1 und 4 nicht dargestellt.

Die in Figur 1 dargestellte Wärmekraftmaschine 10 arbeitet nach dem Clausius-Rankine-Prozess und lässt sich In vier große Baugruppen aufteilen: eine Verdampferbaugruppe A, die im Wesentlichen den in einen Abgasschalldämpfer integrierten und isolierten Verdampfer 12 sowie entsprechende Zu- und Abfuhrleitungen für das Abgas des Verbrennungsmotors sowie das Arbeitsmittel aufweist; eine Expanderbaugruppe B, die einen Expander 14, auch Dampfmotor genannt, eine ebenfalls als eine Baugruppe aufzufassende und mit dem Dampfmotor verbundene Arbeitsmittelpumpe 16, hier in Form einer Kolbenpumpe, sowie ein mit dieser Arbeitsmittelpumpe 16 verbundenes Ventil 18 zur Steuerung oder Regelung der Arbeitsmittelpumpe 16 und entsprechende Zubeziehungsweise Ableitungen und entsprechende Ventile aufweist; und eine Kondensatorbaugruppe C, die den Kondensator 20, einen Fahrtwindejektor 22, einen Tankverschluss 24 sowie einen Vorratsbehälter beziehungsweise Reservoir 26 umfasst.

Aus der Darstellung in Figur 1 ergibt sich auch die prinzipielle Höhenzuordnung der einzelnen Baugruppen. Die Kondensatorbaugruppe A liegt oberhalb der Arbeitsmittelpumpe 16 der Expanderbaugruppe B, um so eine natürliche Zulaufhöhe zusätzlich zur Unterkühlung des Arbeitsmittels am Pumpeneingang vorzusehen.

Der Verdampfer 12 ist als Gegenströmer mit Isolation ausgelegt. Die Durchströmrichtung des Arbeitsmittels ist in dem Verdampfer 12 in Figur 1 von unten nach oben, um Flüssigkeitsschläge am Expander 14 zu verhindern. Entsprechend ergibt sich beim Verdampfer eine günstige Abgasdurchströmung von oben nach unten, In Figur 1 angedeutet durch die Pfeile A1, A2. Eventuell entstehendes abgasseitiges Kondensat kann somit nach unten ablaufen. Im Gegensatz zum Kondensator 20, der aufgrund seiner geringen Temperaturschwankungen thermodynamisch träge sein kann, muss am Verdampfer 12 zwecks schnellerer Nachregelung bei wechselnden Lastfällen eine unnötige Trägheit beziehungsweise Kapazität vermieden werden. Dazu zählt vor allem ein geringer Flüssigkeltsinhalt im Betrieb. Der Verdampfer 12 ist hier in einen Abgasschalldämpfer integriert, sodass im Idealfall keine zusätzlichen Druckverluste für den Verbrennungsmotor resultieren.

Die Verdampferbaugruppe A weist eine Arbeitsmittelzuleitung 30, mit der das von der Arbeitsmittelpumpe 16 zugeführte verflüssigte Arbeitsmittel dem Verdampfer 12 zugeführt wird und eine isolierte Frischdampfleitung 32 auf, die das verdampfte Arbeitsmittel dem Expander 14 zuführt.

Die Expanderbaugruppe B wird mit der Verdampferbaugruppe A über die Frischdampfleitung 32 mit dem verdampften Arbeitsmittel versorgt. Die Frischdampfleitung 32 mündet in den Expander 14.

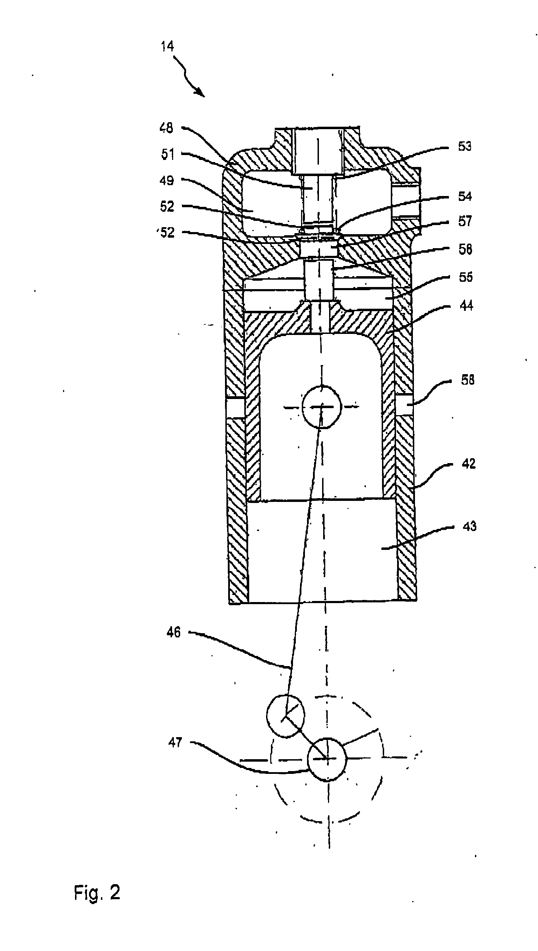

Figur 2 zeigt eine mögliche Ausführungsform des Expanders 14. Der Expander 14 weist ein Gehäuse 42 und einen von dem Gehäuse 42 umschlossenen Zylinderraum 43 auf. In dem Zylinderraum 43 ist ein Arbeitskolben 44 angeordnet, welcher als Tauchkolben ausgeführt ist. Der Arbeitskolben 44 ist gelenkig über einen Kolbenbolzen mit einer hier schematisch angedeuteten Pleuelstange 46 verbunden, welche ihrerseits wiederum gelenkig mit einer Kurbelwelle 47 verbunden ist. Die Frischdampfleitung mündet im Bereich des Zylinderkopfs 48, welcher einen Teil des Gehäuses 42 bildet. Der Zylinderkopf 48 weist einen Einlassraum 49 auf, in dem der Frischdampf einströmen kann. Des Weiteren ist im Bereich des Einlassraums 49 ein Einlassventil 51 vorgesehen, das im Wesentlichen aus einem Ventilkörper 52 besteht. Der Ventilkörper 52 wird durch die Kraft einer Federeinrichtung 53 und unterstützend durch den Druck des Frischdampfs im Bereich des Einlassraums 49 vorliegend mit seiner Dichtschräge 52a gegen einen Ventilsitz 54 gedrückt und verschließt somit den Einlassraum 49 gegenüber einem Arbeitsraum 55. Der Arbeitsraum 55 wird durch den Arbeitskolben 44 im Zylinderraum 43 eingeschlossen.

Wenn die gelenkige Verbindung zwischen der Pleuelstange 46 und der Kurbelwelle 47 in Richtung des Zylinderraums 43 weist, ist der obere Totpunkt erreicht. Kurz bevor dieser obere Totpunkt des Arbeitskolbens 44 erreicht ist, stößt der Arbeitskolben über einen Stößel 56 entlang in den Arbeitsraum 55, der im Bereich seiner dem Zylinderkopf 48 zugewandten Kolbenfläche angeordnet ist, durch einen mechanischen Kontakt mit dem Ventilkörper 52 diesen gegen die Kraft der Federeinrichtung 53 und den Druck des Frischdampfs im Bereich des Einlassraums 49 auf, sodass dieser Ventilkörper 52 sich von seinem Ventilsitz 54 abhebt. Dadurch kann der mit entsprechendem Druck und entsprechender Temperatur vorliegende energiereiche Frischdampf durch die vom Ventilkörper 52 freigegebene Öffnung 57 am Stößel 56 entlang in den Arbeitsraum 55 einströmen und dadurch den Arbeitskolben 44 In Richtung der Kurbelwelle 47 drücken. Über die Pleuelstange 46 und den Kolbenbolzen wird dabei mechanische Energie von dem Arbeitskolben 44 auf die Kurbelwelle 47 übertragen. Mit Verlassen des Bereichs des oberen Totpunkts wird der Stößel 56 gleichzeitig den mechanischen Kontakt zum Ventilkörper 52 unterbrechen, sodass dieser durch die Kraft der Federeinrichtung 53 wieder in den Ventilsitz 54 gedrückt wird und den Bereich des Einlassraums 49 gegenüber dem Bereich des Arbeitsraumes 55 abdichtet.

Durch die Bewegung des Arbeitskolbens 44 in Richtung der Kurbelwelle 47 wird der Frischdampf unter gleichzeitiger Abgabe von Leistung an den Arbeitskolben 44 entsprechend entspannt. Kurz vor Erreichen des unteren Totpunkts des Arbeitskolbens 44, also wenn die gelenkige Anbindung der Pleuelstange 46 an der Kurbelwelle 47 auf der dem Arbeitskolben 44 abgewandten Seite anlangt, ist der Arbeitskolben 44 so tief im Zylinderraum 43 nach unten gefahren, dass er Öffnungen 58 freigibt, welche in der Mantelfläche des Zylinderraums 43 im Gehäuse 42 angeordnet sind. Durch diese Öffnungen, die als Auslass für den entspannten Abdampf dienen, strömt ein Großteil des entspannten Abdampfs aus dem Arbeitsraum 55 ab. Der Arbeitskolben 44 wird dann durch die weitergehende Bewegung der Kurbelwelle 47 aufgrund der Trägheit und/oder weiteren Zylindern am Laufen gehalten und wieder nach oben bewegt, wobei der Restdampf verdichtet wird. Kurz vor dem erneuten Erreichen des oberen Totpunkts öffnet dann der Stößel 56 durch den mechanischen Kontakt zum Ventilkörper 52 wieder die Ventileinrichtung 51 und der oben beschriebene Ablauf beginnt von Neuem.

Die Öffnungen 58 im Bereich des Gehäuses 42 führen den Abdampf in das Kurbelgehäuse 60 (siehe Figur 1), in dem die Kurbelwelle 47 und Teile der Pleuelstange 46 angeordnet sind. Das Kurbelgehäuse 60 kann so als Pulsationsdämpfer für den Abdampf und als Ölzentrifuge genutzt werden. Am Austritt des Expanders 14 ist in dem Kurbelgehäuse 60 ein Siphon 62 angeordnet. Der Siphon 62 sammelt bei einem Stillstand der Wärmekraftmaschine 10 das aus der voluminösen Abdampfleitung 64 zurückfließende Kondensat. Bei einem wiedereinsetzenden Dampfstrom wird dieses Kondensat in den Kondensator 20 mitgerissen.

Die Kurbelwelle 47 des Expanders 14 treibt neben ihrem Hauptzweck, nämlich der Beaufschlagung einer Kurbelwelle einer Verbrennungskraftmaschine zur teilweisen Nutzung der in dem Abgasstrom der Verbrennungskraftmaschine enthaltenen Exergie, auch die Arbeitsmittelpumpe 16 sowie den Lüfter 34 der Kondensatorbaugruppe C an. Die Arbeitsmittelpumpe 16 ist als Kolbenpumpe mit selbsttätigen druckgesteuerten Ventilen ausgeführt, sodass es keine abgesperrten Flüssigkeitsleitungen gibt, auch wenn das an der Saugseite der Pumpe 16 vorhandene Magnetventil 70 bei Stillstand des Verbrennungsmotors zum Zwecke einer Vermeidung einer übermäßigen Verdampferfüllung geschlossen ist. Dadurch wird verhindert, dass das Arbeitsmittel von dem Vorratsbehälter 26 durch die selbsttätigen Ventile in den tiefer liegenden Verdampfer 12 beziehungsweise am Pumpenkolben entlang in den Kurbelraum des Expanders fließt. Für einen plötzlichen gewollten Lastabwurf, etwa bei einer Schnellbremsung, kann über ein zusätzliches Magnetventil 72 an der Druckseite der Pumpe 16 der Verdampfer 12 entgegen der üblichen Durchströmrichtung direkt in den Kondensator 20 entleert werden. Dadurch fällt der Verdampferdruck schlagartig ab. Integriert beziehungsweise parallel zu diesem Ventil Ist noch ein Sicherheitsventil 74 vorhanden, das bei zu hohem Verdampferdruck öffnet. Um eine zusätzliche lange freie Leitung zwischen der Expanderbaugruppe B und der Kondensatorbaugruppe C zu vermeiden, ist die angeschlossene Bypassleitung 76 am steigenden Ende des Siphons 62 als Ejektor 78 eingebunden, der ein Zurückströmen von Fluid in den Expander 14 und eine übermäßige Ölverdünnung verhindern soll.

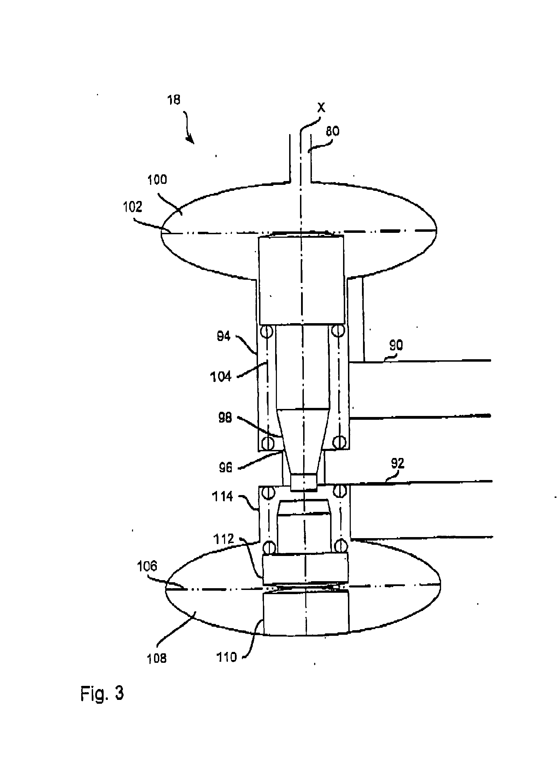

Das mit der Arbeitsmittelpumpe 16 gekoppelte Ventil 18 ist als thermostatisches Bypassventil zwischen der Saug- und der Druckseite der Pumpe 16 angeschlossen. Das Ventil 18 ist detaillierter in Figur 3 beschrieben. Vor einer detaillierten Erörterung des Ventils 18 wird unter Bezugnahme auf Figur 1 der Fühler (Temperaturfühler) 82 des Ventils 18 zur Regelung des zu dem Verdampfer 12 geförderten Arbeitsmittels erläutert. Das Ventil 18 könnte daher auch als Pumpenregelventil bezeichnet werden. Am Beginn der Frischdampfleitung 32 im Inneren des Verdampfers 12 ist der Fühler 82 für das mittels einer Kapillare 80 angeschlossene Ventil 18 in Form eines Gasbehälters gut wärmeleitend angebracht und so platziert, dass er auch mit eintretendem heißen Abgas entlang der Richtung A1 umströmt wird. So ist sichergestellt, dass in der Anlaufphase der Wärmekraftmaschine, in der noch kein Dampf erzeugt wird, das Ventil 18 auf Förderung schaltet. Dies wird näher unter Bezugnahme auf die Figur 3 erläutert. Die Kapillare 80 ist aus Stabilitätsgründen unter der Isolation der Frischdampfleitung 32 zum Expander 14 geführt, an dem auch die Arbeltsmittelpumpe 16 und deren Ventil 18 sitzen.

Figur 3 zeigt das als thermostatisches Bypassventil ausgeführte Pumpenregelventil, vorliegend als Ventil 18 bezeichnet. Die Abbildung der Figur 3 ist lediglich schematisch und soll die Funktionsweise des Ventils 18 erläutern. Das Ventil 18 weist einen Eingang 90 auf, der mit der Druckseite der Arbeitsmittelpumpe 16 verbunden ist, sowie einen Ausgang 92 auf, der mit der Saugseite der Arbeitsmittelpumpe 16 verbunden ist. Eingang 90 und Ausgang 92 des Ventils 18 sind an das schematisch dargestellte Ventilgehäuse 94 gekoppelt. In dem Ventilgehäuse 94 ist ein Ventilsitz 96 vorgesehen, der mit einem Ventilstößel 98 zusammenwirkt. Der Ventilstößel 98 ist im Bereich des Ventilsitzes 96 konusförmig ausgebildet und kann im Übrigen im Wesentlichen eine Zylinderform aufweisen. In dem Einströmbereich des Ventils 18 ist ein mit der Kapillare 80 verbundenes erstes Gasvolumen 100 vorgesehen, das über eine erste Membran 102 von dem übrigen Inneren des Ventils 18 abgetrennt ist. Der Ventilstößel 98 befindet sich in Anlage mit der ersten Membran 102. Der Ventilstößel 98 ist über ein erstes Federelement 104 derart mit einer Federkraft beaufschlagt, dass er gegen die erste Membran 102 gedrückt wird.

Über die Kapillare 80 gelangt der von der Frischdampftemperatur und geringfügig von der Abgastemperatur am Fühler 82 (Figur 1) abhängige Gasdruck auf die Oberseite der ersten Membran 102. Die andere Seite der ersten Membran 102 steht in Kontakt mit dem Verdampferdruck des flüssigen Arbeitsmittels, der über eine vom Arbeitsmittel beaufschlagte Fläche, vorliegend auf der Unterseite der ersten Membran 102, vermittelt wird. Zusätzlich zu dieser auf die erste Membran 102 ausgeübten Kraft addiert sich die Federkraft des ersten Federelementes 104. Steigt der Verdampferdruck, das heißt der dem flüssigen Arbeitsmittel an der Verdampferseite der Arbeitsmittelpumpe 16 innewohnende Druck bei gleichbleibender Temperatur des Fühlers 82, wird der Ventilstößel 98 stärker in Richtung der ersten Membran 102 gedrängt und die Durchflussmenge des Arbeitsmittels durch das Ventil 18 erhöht sich aufgrund des Zusammenwirkens der konischen Form des Ventilstößels 98 und des Ventilsitzes 96. Infolge dessen sinkt die durch die Arbeitsmittelpumpe 16 in den Verdampfer 12 geförderte Arbeitsmittelmenge, wodurch der Dampfdruck des Verdampfers 12 wieder sinkt (siehe die Figur 1). Bei einem der Temperatur des Fühlers 82 entsprechend zu niedrigem Verdampferdruck wird die Durchflussmenge des Arbeitsmittels durch das Ventil 18 verringert, sodass die von der Arbeitsmittelpumpe 16 zu dem Verdampfer 12 geförderte Arbeitsmittelmenge ansteigt und damit auch der Verdampferdruck. Somit regelt sich die Überhitzung beziehungsweise allgemein der Zusammenhang zwischen Druck und Temperatur auch bei überkritischer Betriebsweise am arbeitsmittelseitigen Verdampferaustritt selbsttätig.

Auf der Ausgangsseite des Ventils 18 Ist eine zweite Membran 106 angeordnet, die ein abgeschlossenes Volumen 108 von dem Rest des Ventils 18 abtrennt. Innerhalb des abgeschlossenen Gasvolumens 108 ist ein Anschlagselement 110 vorgesehen, gegen das ein entlang der Bewegungsachse X des Pumpenstößels 98 beweglicher Stößelmitnehmer 112 mittels eines zweiten Federelements 114 vorgespannt ist. Die Oberseite der zweiten Membran 106 steht in Kontakt mit dem Kondensatordruck, das heißt dem Druck des flüssige Arbeitsmittels auf der Saugseite der Arbeitsmittelpumpe 16. In der vorliegenden Ausführungsform ist dieser Kondensatordruck gleich dem Umgebungsdruck. Zusätzlich zu diesem Druck wirkt in gleicher Richtung die Federkraft des zweiten Federelements 114 auf die zweite Membran 106. Der Gasdruck innerhalb des abgeschlossenen Volumens 108 hängt von der Ansaugtemperatur der Arbeitsmittelpumpe 16, also der Temperatur des Arbeitsmittels auf der Saugseite der Arbeitsmittelpumpe 16 ab und wirkt in die entgegengesetzte Richtung. Steigt die Ansaugtemperatur, erhöht sich auch der in dem Volumen 108 wirkende Gasdruck. Bei Überschreiten der Federkraft des ersten Federelements 114 wird folglich durch Anstoß des Stößelmitnehmers 112 eine zusätzliche Kraft auf den Pumpenstößel 98 ausgeübt und die Durchflussmenge des Arbeitsmittels des Ventils 18 erhöht. Dadurch sinkt insgesamt der von der Arbeitsmittelpumpe 16 zu dem Verdampfer 12 geförderte Massenstrom und die Überhitzung am Verdampferaustritt und die Unterkühlung am Kondensatoraustritt steigen.

Somit wird durch ein einfaches Ventil 18 der gesamte Prozess der Wärmekraftmaschine 10 überwacht. An den gasseitigen Membrangehäusen sind Füllventile 130,132 vorhanden (siehe Figur 1), die mit bestimmten Drücken im kalten Zustand aufgefüllt werden. Dabei kann es sich beispielsweise um Stickstoff aus einer Druckgasflasche handeln.

Unter erneuter Bezugnahme auf Figur 1 wird nun die Funktionalität der Kondensatorbaugruppe C erläutert. Wie bereits erwähnt, ist die Kondensatorbaugruppe C oberhalb der Arbeitsmittelpumpe 16 angeordnet. Neben dem Kondensator 20 umfasst die Kondensatorbaugruppe einen Tankverschluss 24. Dieser befindet sich über dem höchsten Punkt des Kondensators 20 und dient neben der Nachfüllmöglichkeit des Arbeitsmittels auch der Abfuhr leichterer nicht kondensierbarer Gase, wie etwa eingedrungener Luft. Er ist außerdem über eine Druckausglelchsleitung 120 mit dem Vorratsbehälter 26 verbunden, der neben dem Kondensator 20 in einer bestimmten Höhe angeordnet ist. Der Vorratsbehälter 26 weist ein deutlich größeres Flüssigkeitsvolumen auf als der flüssigkeitsberührte Teil des Kondensators 20. Dadurch realisiert der Vorratsbehälter 26 einen bestimmten Flüssigkeitsstand zur Unterkühlung im Kondensator 20 und speichert immer unterkühlte Flüssigkeit, auch wenn eine geringe Menge Dampf direkt auf dem Flüssigkeitsspiegel kondensiert. Da beim Kondensieren ein Flüssigkeitsfilm an der unterkühlten Rohrinnenwand schädlich ist, ist der Kondensator 20 mit einem kaminartigen, relativ hohen Aufbau ausgelegt.

Zwischen zwei Sammler- beziehungsweise Verteilerrohren 122, 124 mit verhältnismäßig großem Durchmesser befinden sich dünnere senkrechte Röhren 126 mit mäandernden Kühlrippen, da der äußere Wärmeübergang deutlich geringer als der Innere ist.

Günstigerweise wird der Kondensator 20 im Anwendungsfall zusammen mit einer Verbrennungskraftmaschine, die in einem Nutzfahrzeug angeordnet Ist, hinter dem Fahrerhaus desselben platziert und als Gegenströmer ausgebildet. Die erwärmte Kühlluft tritt dann über der Dachfläche aus. Insbesondere bietet es sich an, einen Ejektor 128 am Ende der Kühlluftleitung vorzusehen, der mittels Fahrtwind eine gewisse Druckentlastung für den Lüfter 34 bringt. Dieser Lüfter 34 ist zusammen mit einem Luftfilter 35 am unteren Kühllufteintritt angeordnet, da so der maximale Luftmassestrom gefördert werden kann. Bei niedrigeren Temperaturen kann er saugseitig gedrosselt werden, um so eine gewisse Leistungsreduzierung des direkt angetriebenen Lüfters 34 zu erlangen. Diese Regelung stellt einen Kompromiss dar und ist der sowieso auslegungsgemäß geringen Leistungsaufnahme des Lüfters 34 geschuldet. Bei entsprechendem Platzangebot könnte der Kondensator 20 analog dem Wasserkühler im Frontbereich des Fahrzeugs grundsätzlich auch als Kreuzströmer ausgebildet sein.

Als Arbeitsmittel ist bei der vorstehenden Ausführungsform ein Gemisch aus Ethanol und Glycerol vorgesehen. Ethanol wirkt als thermodynamisch optimales Verdampfungsmedium, während Glycerol als Schmieröl fungiert. Beide Partner sind umweltneutral und mischen sich in der Flüssigphase gut, weshalb das Glycerol immer wieder in den Expander 14 zurückgelangt und sich nur im Ölsumpf des Expanders 14 anreichern kann, wo der größte Dichteunterschied zwischen überhitztem Ethanol und flüssigem Glycerol vorliegt und so eine gewollte Anreicherung von Letzterem erreicht wird.

Figur 4 zeigt ein Blockschaltbild einer zweiten Ausführungsform einer erfindungsgemäßen Wärmekraftmaschine 200. In dem in Standardsymbolik ausgeführten Blockschaltbild der Figur 4 sind Leitungen, die das Arbeitsmedium führen, als durchgezogene Linien dargestellt. Kapillarleitungen sind als strichpunktierte Leitungen dargestellt und zusätzlich mit einem Kreissymbol versehen. Diese können gegebenenfalls auch als elektrische Leitungen mit entsprechenden Sensoren ausgeführt werden. Membranen beziehungsweise von Membranen abgeschlossene Gasvolumina sind als Halbkreise dargestellt. Stetig regelbare Ventile sind zusätzlich mit einem pfeilförmigen Dreiecksymbol versehen.

Der generelle Aufbau der Wärmekraftmaschine 200 ist dem Aufbau der in Figur 1 dargestellten Wärmekraftmaschine 10 ähnlich. Er umfasst die wesentlichen Hauptbaugruppen Verdampfer A, Expander B mit der auch als eigene Baugruppe aufzufassenden Speisepumpe sowie Kondensator C. Die Verdampferbaugruppe A weist einen Hauptstromverdampfer 212 und einen AGR-Verdampfer 213 auf. Beide Verdampfer 212,213 werden von dem Abgasstrom des nicht dargestellten Verbrennungsmotors durchströmt und welsen folglich Abgaseingänge 230, 232 sowie Abgasausgänge 234, 236 auf. Die Pumpen-Dampfmotorbaugruppe B weist den Dampfmotor 214 sowie die Speisepumpe 216 auf. Die Speisepumpe 216 ist mechanisch mit dem Dampfmotor 214 gekoppelt und wird von diesem angetrieben. Dies ist symbolisch durch eine gestrichelte Linie 295 dargestellt.

Des Weiteren ist in der Baugruppe B ein zusätzlicher Wärmetauscher 238 vorgesehen. Die Kondensatorbaugruppe C weist neben dem eigentlichen Kondensator 220 eine zugehörige Turbine 240, einen Vorratsbehälter beziehungsweise Reservoir 226 sowie eine Kühlschlange 242 auf.

Ausgehend von dem Ausgang der Speisepumpe 216 wird nun das Zusammenwirken der Elemente der verschiedenen Baugruppen sowie die einzelnen Verbindungen der Bauteile untereinander erläutert, Die Speisepumpe 216 fördert das flüssige Arbeitsmittel über die Leitung 244 zu einem Tellungsventil 246. Dort teilt sich der Arbeitsmittelstrom und wird zu einem Teil zu dem AGR-Verdampfer 213 und zu einem anderen Teil zu dem Hauptstromverdampfer 212 geleitet. Das Teilungsverhältnis bestimmt sich aus der für den AGR-Verdampfer notwendigen Abgasausgangstemperatur am AGR-Verdamperauslass 236. Diese Temperatur wird über eine Kapillare 291 mit einem Fühlelement 289 oder eine geeignete elektrische Sensorlösung dem Teilungsventil 246 zugeführt.

Über eine Leitung 248 gelangt das noch flüssige Arbeitsmittel von dem Teilungsventil 246 zu dem Wärmetauscher 238. Dieser wirkt bei Bedarf als Vorwärmer und erwärmt das Arbeitsmittel. Der Wärmetauscher 238 Ist vorzugsweise als Gegenstrom-Wärmetauscher ausgebildet. Über die Verbindungsleitung 250 gelangt das über den Vorwärmer 238 eventuell vorgewärmte Arbeitsmittel zu dem Hauptstromverdampfer 212, der ebenfalls als Gegenstrom-Wärmetauscher ausgelegt ist. Dort wird das Arbeitsmittel über die am Einlass 230 eintretenden Abgase weiter erwärmt und verlässt den Hauptstromverdampfer 212 über eine Leitung 252.

Nach dem Leitungsknoten 253, wo sich der Massenstrom des Hauptstromverdampfers 212 und der des AGR-Verdampfers 213 mischen, strömt der zusammengeführte Massenstrom über ein Rückschlagventil 260. Das Rückschlagventil 260 ist für den Fall vorgesehen, wenn der Dampfmotor 214 anläuft. Dann kann dieser auch als Verdichter arbeiten und das Arbeitsmittel entgegen der eigentlich vorgesehenen Strömungsrichtung rückwärts fördern. Das Rückschlagventil 260 verhindert so eine Entleerung von Verdampfer und Pumpe.

An dem folgenden Leitungsknoten 254 teilt sich der Arbeitsmittelstrom. Ein Teil gelangt über die Leitung 256 zu dem Vorwärmer 238, um dort wie beschrieben das flüssige Arbeitsmedium vorzuwärmen. Der andere Teil strömt über die Leitung 258 zu einem Absperrventil 262. Das Absperrventil 262 dient einer schnellen Blockierung des Massenstroms zu dem Verdampfer 214 beispielsweise beim Bremsen beziehungsweise Kuppeln.

Im Gegensatz zum Blockschaltbild in Figur 1 wird hier der Verdampfer im Falle eines notwendigen Lastabfalls nicht entleert, was bei größeren Verdampferinhalten aus energetischer Sicht notwendig ist.

Das Absperrventil ist zudem mit einer Rückschlagfunktion so ausgestattet, dass zum Beispiel im Falle des Anlaufens eventuell flüssiges Fluid Richtung Vorwärmer strömen kann, auch wenn es abgesperrt ist.

Von dem Dampfmotor beziehungsweise Expander 214 wird das entspannte Arbeitsmedium über Leitungen 264, 266 der den ventilator am luftgekühlten Kondensator 220 antreibenden Turbine 240 zugeführt und gelangt von dort über die Leitung 268 in den Kondensator 220.Dieses Prinzip realisiert auf einfache Weise eine gute Anpassung des Kühlluftmassestroms an den Arbeitsmittelmassestrom. Das sich in dem Kondensator 220 sammelnde und mit bestimmter Höhe stehende Kondensat wird unterkühlt und über eine Leitung 270 dem Vorratsbehälter 226 zugeleitet. Die Dreiecke 271 zeigen den Flüssigkeitspegel an, der durch ein Schauglas im Vorratsbehälter 226 kontrolliert werden kann. Das Reservoir 226 und der Kondensator 220 sind über ein Ablassventil 272 entleerbar, das Reservoir 226 ist über ein Füllventil 274 befüllbar.

Die Oberseite des Reservoirs 226 ist mit einer Kühlschlange 242 verbunden. Dabei handelt es sich beispielsweise um einen langen Schlauch, der sich im Wesentlichen in der Senkrechten erstrecken kann und einen Druckausgleich mit der Umgebung ermöglicht. Das obere Ende ist so gestaltet, dass kein Regenwasser eindringen kann. Über die Kühlschlange kann das eventuell in der Luft des Kondensators 220 befindliche Arbeitsmittel kondensieren und wieder zurück in das Reservoir 226 fließen. Eine Leitung 276 verbindet den Kondensator 220 beziehungsweise das Reservoir 226 mit der Speisepumpe 216, womit der Kreislauf geschlossen ist.

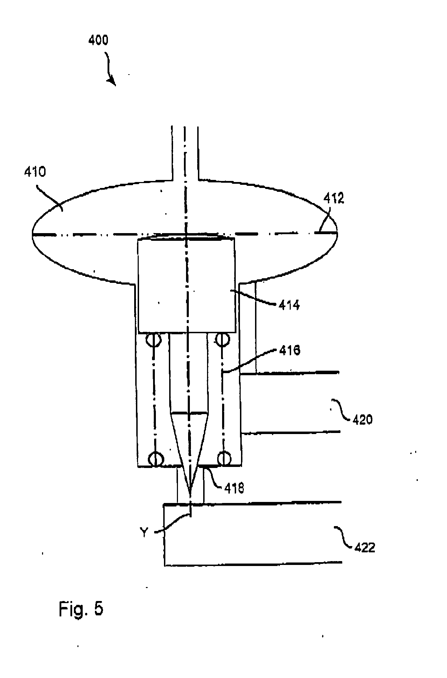

Die Ausführungsform der Figur 4 umfasst zwei Ventile, die den thermodynamischen Kreislauf regeln. Parallel zu der Speisepumpe 216 ist ein Ventil 218 angeordnet, Das Ventil Ist über die Leitungen 278 und 280 mit dem kondensatorseitigen Pumpeneingang beziehungsweise dem verdampferseitigen Pumpenausgang verbunden. Der stetig regelbare Durchfluss durch das Ventil 218 wird, wie bereits zu dem Ventil 18 der Figur 1, beschrieben, über das Verhältnis aus dem pumpenausgangsseitigen Arbeitsmitteldruck und der Temperatur des dem Verdampfer 212 zugeführten Abgases kombiniert mit der verdampferausgangsseitigen Arbeitsmitteltemperatur gesteuert. Der verdampferseitige Arbeitsmitteldruck wird in Figur 4 symbolisch durch die Leitung 281 zugeführt, die Abgas- beziehungsweise Arbeitsmitteltemperatur über die Kapillarleitung 282 einer Membran 284 zugeführt. Die Kapillare 282 weist in der Figur 4 zwei Fühlelemente 286, 288 auf. Dies ist aufgrund des zusätzlichen AGR-Verdampfers notwendig. Eine konkrete Ausgestaltung des Ventils 218 ist nachstehend in Figur 5 beschrieben. Der aus den Fühlelementen 286, 288, dem Ventil 218 und der Pumpe 216 gebildete Regelkreis steuert beziehungsweise regelt hauptsächlich das Verhalten des Hauptstromverdampfers 212.

Das Verhalten des Kondensators 220 wird hauptsächlich über ein zweites Ventil 290 gesteuert beziehungsweise geregelt. Das Ventil 290 ist zwischen dem Vorwärmer 238 und der Kondensatorbaugruppe C angeordnet. Eine Leitung 292 verbindet den Vorwärmer 238 mit dem Ventil 290, eine Leitung 294 erstreckt sich von dem Ventil 290 bis zur von dem Dampfmotor 214 zu der Turbine 240 führenden Leitung 264. In vergleichbarer Weise wie das Ventil 218 wirken der kondensatorausgangsseitige Arbeitsmitteldruck, symbolisch über eine Leitung 296, sowie die Temperatur des kondensatorausgangsseitigen Arbeitsmittels über eine Kapillare 298 auf eine Membran 299. Die Kapillare 298 ist über ein geeignetes Fühlelement 297 mit der kondensatorausgangsseitigen Leitung 276 verbunden.

Die Wirkungsweise des Ventils 290 ist wie folgt, Bei steigender Temperatur des kondensatorausgangsseitigen Arbeitsmittels in der Leitung 276 - gleichbleibenden Arbeitsmitteidruck vorausgesetzt - verringert sich die Unterkühlung des in der Leitung 276 befindlichen Arbeitsmittels. Bei Unterschreiten eines kritischen Wertes öffnet sich das Ventil 290 mit einem dem Verhältnis aus Temperatur und Druck entsprechenden stetigen Ansprechverhalten, Durch den so sich erhöhenden Massenstrom durch die Leitungen 292, 294, die den Vorwärmer 238 mit dem Kondensator 220 verbinden, erfolgt eine stärkere Vorwärmung des dem Hauptstromverdampfer 212 über die Leitung 250 zugeführten flüssigen Arbeitsmittels. Infolge dessen verringert sich der Wärmeeintrag von dem Abgasstrom in den Arbeitsmittelkreislauf am Hauptstromverdampfer 212. Dies ermöglicht es dem Kondensator 220 durch seine dann ebenfalls geringere Wärmelast wieder die gewünschte Unterkühlung des Arbeitsmittels zu erreichen.

Das Ventil 290 ist parallel mit einem Sicherheitsventil 293 geschaltet, das einen zu hohen Überdruck in den Verdampfern beziehungsweise im Vorwärmer verhindert.

Figur 5 zeigt eine schematische Darstellung einer erfindungsgemäßen Ausführungsform der Ventile der Wärmekraftmaschine der Figur 4. Das Ventil 400 weist ein Gasvolumen 410 auf, in dem eine Membran 412 angeordnet ist. Die Membran 412 ist mit einem Ventilkörper 414 gekoppelt. Der Ventilkörper 414 ist über eine Feder 416 gegen die Membran 412 vorgespannt. Der Ventilkörper 414 weist an seiner der Membran 412 abgewandten Seite eine Kegelform auf und Ist gegenüber dem Ventilsitz 418 entlang einer Achse Y beweglich. Die Relativposition von Ventilkörper 414 und Ventilsitz 418 bestimmt die Durchflussmenge durch das Ventil 418. Das hinsichtlich seines Massenstroms zu steuernde Arbeitsmedium kann über den Anschluss 420 in das Ventil eintreten und über den Anschluss 422 austreten beziehungsweise umgekehrt.

Bei Verwendung des Ventils 400 beispielsweise als Pumpenregeiventil 218 ergibt sich je nachdem, ob der Anschluss 420 mit dem Pumpenausgangsdruck oder dem Pumpeneingangsdruck belegt wird, ein unterschiedliches Regelverhalten. In dem Fall, dass der Anschluss 420 mit dem Pumpenausgangsdruck verbunden ist, ergibt sich ein starker Einfluss des Verdampferdruckes auf die Austrittstemperatur des Hauptstromverdampfers 212 (Figur 4) beziehungsweise der Eintrittstemperatur des Expanders 214. Im umgekehrten Fall, das heißt, wenn der Anschluss 420 mit dem Pumpeneintrittsdruck und der Anschluss 422 mit dem Pumpenausgangsdruck belegt Ist, wirkt nur die Ventilsitzfläche. Dies bewirkt einen geringeren Einfluss des Verdampferdruckes auf das Regelverhalten, Dies ist beispielsweise bei Verwendung von Ethanol als Arbeitsmedium sinnvoll.

In beiden Fällen steigt also mehr oder weniger die Austrittstemperatur am Hauptstromdampfer 212 beziehungsweise die Eintrittstemperatur am Expander 214 mit dem Verdampferdruck.

Diese Anwendung eines Regelventils als Pumpenbypassventll zum Regeln der Förderleistung in Abhängigkeit des Austrittszustandes des Arbeitsmittels am Verdampfer hat sich als besonders vorteilhaft herausgestellt.

## Patentansprüche

1. Wärmekraftmaschine (10, 200) mit einem Arbeitsmittelkreislauf, umfassend
1.1 einen Verdampfer (12, 212) zum Verdampfen des flüssigen Arbeitsmittels,
1.2 einen Expander (14, 214) zum Entspannen des verdampften Arbeitsmittels,
1.3 einen Kondensator (20, 220) zum Verflüssigen des entspannten Arbeitsmittels aus dem Expander (14,214), und
1.4 eine Arbeitsmittelpumpe (16, 216) zur Zufuhr von flüssigem Arbeitsmittel zu dem Verdampfer (12, 212), wobei,
1.5 ein Ventil (18, 218) zur Steuerung der von der Arbeitsmittelpumpe (16, 216) zu dem Verdampfer (12, 212) geförderten Arbeitsmittelmenge vorgesehen ist,
**dadurch gekennzeichnet, dass**
1.6 das Ventil (18, 218)
- einen Ventilsitz,
- einen Ventilkörper (98),
- einen über eine Gasdruckleitung oder sonstige druckleitende Verbindung angeschlossenen Fühler (82, 286, 288) und
- ein Steuerorgan (102) an dem Ventilkörper (98) oder zusätzlich zu dem Ventilkörper (98) aufweist, wobei
1.7 der Ventilkörper (98) entsprechend seiner Stellung relativ zu dem Ventilsitz die Durchflussmenge des Arbeitsmittels durch das Ventil (18, 218) reguliert und das Steuerorgan (102) die Stellung des Ventilkörpers (98) gemäß einem über den Fühler (82, 286, 288) vermittelten und von einer Zustandsgröße des Arbeitsmittels oder eines anderen Mediums abhängigen Steuerdruck beeinflusst.

2. Wärmekraftmaschine nach Anspruch 1, **dadurch gekennzeichnet, dass** das Steuerorgan eine Membran (102, 106) oder einen Kolben aufweist, welche/welcher insbesondere auf einer ersten Seite von einem durch die Gasdruckleitung oder sonstige druckleitende Verbindung geführten Medium, insbesondere Gas, beaufschlagt ist, und auf einer zweiten, der ersten Seite abgewandten Seite zumindest mittelbar durch den Druck des Arbeitsmittels beaufschlagt ist.

3. Wärmekraftmaschine nach Anspruch 1 oder 2, **dadurch gekennzeichnet, dass** der Fühler (82, 286, 288) ein von einem Frischdampf oder einem Abgas umströmtes Gasvolumen umfasst.

4. Wärmekraftmaschine nach einem der vorhergehenden Ansprüche, **dadurch gekennzeichnet, dass** das Ventil (18, 218) parallel zu der Arbeitsmittelpumpe (16, 216) zwischen einer Saugseite und einer Druckseite der Arbeitsmittelpumpe (16, 216) angeordnet ist.

5. Wärmekraftmaschine nach einem der vorhergehenden Ansprüche, **dadurch gekennzeichnet, dass** das Steuerorgan ein erstes Steuerorgan (102) zur Steuerung der Durchflussmenge durch das Ventil (18, 218) ist und ein zweites Steuerorgan (106) zur Steuerung der Durchflussmenge durch das selbe oder ein weiteres Ventil (18, 290) vorgesehen ist.

6. Wärmekraftmaschine nach Anspruch 5, **dadurch gekennzeichnet, dass** das erste Steuerorgan (102) zur Steuerung der Durchflussmenge gemäß eines ersten Zustandsgrößenverhältnisses des Arbeitsmittels und das zweite Steuerorgan (106) zur Steuerung der Durchflussmenge gemäß eines zweiten Zustandsgrößenverhältnisses des Arbeitsmittels ausgelegt sind.

7. Wärmekraftmaschine nach einem der vorhergehenden Ansprüche, **dadurch gekennzeichnet, dass**
- an einer Gasseite (100) des ersten Steuerorgans (102) ein von einer Dampftemperatur des verdampften Arbeitsmittels und/oder von einer Abgastemperatur abhängiger Gasdruck anliegt und
- an einer Arbeitsmittelseite des ersten Steuerorgans (102) eine Federkraft und/oder ein Druck des flüssigen Arbeitsmittels auf der Druckseite der Arbeitsmittelpumpe (16) anliegt/anliegen.

8. Wärmekraftmaschine nach einem der vorhergehenden Ansprüche, **dadurch gekennzeichnet, dass**
- an einer Gasseite (108) des zweiten Steuerorgans (106) ein von der Temperatur des flüssigen Arbeitsmittels an der Saugseite der Arbeitsmittelpumpe (16) abhängiger Gasdruck anliegt und
- an einer Arbeitsmittelseite des zweiten Steuerorgans (106) eine Federkraft und/oder der Druck des flüssigen Arbeitsmittels an der Saugseite der Arbeitsmittelpumpe (16) anliegt/anliegen.

9. Wärmekraftmaschine nach Anspruch 8, **dadurch gekennzeichnet, dass** die Gasseite (108) des zweiten Steuerorgans (106) ein abgeschlossenes Gasvolumen umfasst oder durch dieses gebildet wird.

10. Wärmekraftmaschine nach einem der vorhergehenden Ansprüche, **dadurch gekennzeichnet, dass** das erste und das zweite Steuerorgan in einem Ventil (18) angeordnet sind.

11. Wärmekraftmaschine nach Anspruch 10, **dadurch gekennzeichnet, dass** das erste und das zweite Steuerorgan (102,106) auf ein Stellelement (98) wirken.

12. Wärmekraftmaschine nach einem der Ansprüche 1 bis 9, **dadurch gekennzeichnet, dass** das erste Steuerorgan in einem ersten Ventil (218) und das zweite Steuerorgan in einem zweiten Ventil (290) angeordnet sind.

13. Wärmekraftmaschine nach einem der Ansprüche 1 bis 9, **dadurch gekennzeichnet, dass** die Wärmekraftmaschine einen Wärmetauscher (238) umfasst, wobei der Wärmetauscher mit dem Eingang (250) des Verdampfers (212) und mit dem Ausgang (252, 256) des Verdampfers verbunden ist.

14. Wärmekraftmaschine nach Anspruch 13, **dadurch gekennzeichnet, dass** das zweite Ventil (290) verdampferausgangsseitig nach dem Wärmetauscher (238) angeordnet ist.

15. Wärmekraftmaschine nach Anspruch 13, **dadurch gekennzeichnet, dass** der Wärmetauscher (238) mit dem Kondensator (220) über das zweite Ventil (290) verbunden ist.

16. Wärmekraftmaschine nach einem der vorhergehenden Ansprüche, **dadurch gekennzeichnet, dass** zusätzlich zu dem ersten Verdampfer (212) ein zweiter Verdampfer (213), insbesondere ein Abgasrückführungsverdampfer, angeordnet ist.

17. Wärmekraftmaschinen nach Anspruch 16 **dadurch gekennzeichnet, dass** ein Teilungsventil (246) den Arbeitsmittelmassestrom zum Abgasrückführungsverdampfer in Abhängigkeit von der Abgasaustrittstemperatur mittels eines Fühlers (289) regelt.

18. Antriebsvorrichtung, umfassend
eine Verbrennungskraftmaschine und
eine Wärmekraftmaschine (10, 200) nach einem der Ansprüche 1 bis 17, die derart ausgebildet ist, dass dem geschlossenen Arbeitsmittelkreislauf der Wärmekraftmaschine (10, 200) zum Antrieb des Dampfmotors (14, 214) Abwärme aus dem Abgas der Verbrennungskraftmaschine zuführbar ist, wobei der Fühler (82, 286, 289, 285) der Wärmekraftmaschine (10, 200) insbesondere in einer wärmeübertragenden Verbindung mit dem Frischdampf des Verdampfers (12, 212) und/oder dem Abgas der Verbrennungskraftmaschine, Insbesondere im Bereich des Eintrittes des Abgases in den Verdampfer (12, 212), steht.
